## Europäisches Patentamt

(19) **European Patent Office**

**Office européen des brevets**

(11) Veröffentlichungsnummer: **0 044 998**
**A1**

(12) # EUROPÄISCHE PATENTANMELDUNG

(21) Anmeldenummer: **81105467.5**

(51) Int. Cl.³: **F 24 J 3/00**

(22) Anmeldetag: **13.07.81**

(30) Priorität: **26.07.80 DE 3028449**

(43) Veröffentlichungstag der Anmeldung: **03.02.82**
**Patentblatt 82/5**

(84) Benannte Vertragsstaaten: **CH DE FR GB IT LI**

(71) Anmelder: **INTERATOM Internationale Atomreaktorbau GmbH, Friedrich-Ebert-Strasse, D-5060 Bergisch Gladbach 1 (DE)**

(72) Erfinder: **Hunter, John D., Dipl.-Ing., An der Engelsfuhr 99, D-5060 Bergisch Gladbach 2 (DE)**

(74) Vertreter: **Mehl, Ernst, Dipl.-Ing. et al, Postfach 22 01 76, D-8000 München 22 (DE)**

(54) Latentwärmespeicher mit mehreren Speichermedien.

(57) Die Erfindung betrifft einen Latentwärmespeicher mit Ein- und Auslässen für ein Wärmetransportfluid, das den Speicher während des Ladevorganges in der einen und während des Entladevorganges in der entgegengesetzten Richtung durchströmt, wobei das Speichermedium in mehreren voneinander getrennten, nacheinander vom Transportfluid bestrichenen Behältern eingeschlossen ist. Erfindungsgemäß sind bei diesem Latentwärmespeicher mit Speichermedien unterschiedlich hohen Schmelzpunktes gefüllte Behälter (4) vorhanden, welche abgestuft nach dem Schmelzpunkt dieser Füllung entlang des Weges des Transportfluids angeordnet sind. Auf diese Weise wird das Wärmespeichermedium dem natürlichen Temperaturprofil des Wärmetransportfluids im Wärmespeicher angepasst und so ein rascherer Phasenübergang des Speichermediums im gesamten Wärmespeicher ermöglicht.

0044998

VPA 80 P 8571 E

INTERATOM

Internationale Atomreaktorbau GmbH

D-5060 Bergisch Gladbach 1

Latentwärmespeicher mit mehreren Speichermedien

Die vorliegende Erfindung betrifft einen Latentwärmespeicher mit dem im Oberbegriff des Patentanspruchs
genannten Merkmal . Derartige Wärmespeicher nutzen
die Tatsache aus, daß beim Phasenübergang fest-flüssig
und umgekehrt erhebliche Wärmemengen frei werden bzw.
gebunden werden. Sie erscheinen z. B. geeignet, als
Puffer in Sonnenenergieanlagen eingesetzt zu werden,
um die tageszeitlich oder durch die Witterung bedingten Wechsel in der Intensität der Sonneneinstrahlung
auszugleichen. Als geeignete Speichermedien werden
von der Fachwelt insbesondere verschiedene Salze und
deren eutektische Mischungen in Betracht gezogen.

Die Ein- bzw. Auskoppelung der Wärme geschieht in
Wärmespeichern, durch die ein Wärmetransportfluid
zirkuliert, z. B. flüssiges Natrium oder Helium.
Während des Ladevorganges wird dieses Fluid durch
eine äußere Energiequelle aufgeheizt, während es in
der Entladephase beispielsweise zur Dampferzeugung
benutzt wird. Zur Erzielung einer ausreichend großen
Wärmetauschfläche ist es bekannt, das Speichermedium
in zahlreiche kleine, meist kugelförmige Behälter
einzuschließen und das Transportfluid durch die so
entstehende Kugelschüttung hindurchzuführen, wobei
beim Übergang von der einen Betriebsform in die andere
auch die Strömungsrichtung des Wärmetransportfluids umgekehrt wird. Dabei stellt sich zwischen Ein- und Auslaß
des Wärmetauschers ein ansteigendes bzw. abfallendes

We/Wa 24.07.1980

0044998

Temperaturprofil im Wärmetransportfluid ein. Wird nur ein einziges Speichermedium verwendet, führt dies dazu, daß der die größten Energiemengen speichernde bzw. freisetzende Phasenübergang des Speichermediums nur jeweils in einer verhältnismäßig kleinen Zone des Wärmetauschers stattfindet. Beim Ladevorgang (für den u. U. nur kurze Zeit zur Verfügung steht, bei einer Sonnenenergieanlage etwa die Mittagsstunden) ist ein nahe dem Einlaß liegender Teil des Speichermediums bereits geschmolzen und nimmt auch bei weiterer Temperaturzunahme nur noch geringere Wärmemengen auf und ein anderer, nahe dem Auslaß gelegener Teil hat die Schmelztemperatur wegen hier nur noch ungenügender Temperatur des Wärmetransportmediums noch nicht erreicht.

Aufgabe der vorliegenden Erfindung ist eine verbesserte Ausstattung eines Wärmespeichers der beschriebenen Art mit Wärmespeichermedium, die dem natürlichen Temperaturprofil des Wärmetransportfluids im Wärmespeicher angepaßt ist und so einen rascheren Phasenübergang des Speichermediums im gesamten Wärmespeicher ermöglicht.

Die Lösung dieser Aufgabe erfolgt durch die im kennzeichnenden Teil des Patentanspruchs angegebenen Mittel. Die Schmelztemperatur der verschiedenen benutzten Speichermedien und ihr Anteil an der Gesamtmenge sollen dabei derart gewählt werden, daß der Phasenübergang der verschiedenen Medien bei einer Temperatur stattfindet, die nur wenig unter der an dem betreffenden Ort im Wärmetauscher sich einstellenden Temperatur liegt, wenn beim Eintritt während des Ladevorgangs bzw. beim Austritt während des Entladevorgangs eine annähernd gleiche Temperatur des Wärmetransportfluids vorausgesetzt wird.

0044998

Ein Ausführungsbeispiel der Erfindung ist schematisch in der Zeichnung dargestellt, und zwar zeigt

Figur 1 einen LÄngsaxialschnitt durch einen Wärmespeicher und

Figur 2 ein sich in demselben einstellendes Temperaturprofil.

Der Wärmespeicher besteht aus einem Gehäuse 1, das an seinem oberen und unteren Ende mit je einem Ein- bzw. Auslaß 2 für ein Wärmetransportfluid versehen ist, das die z. B. in einer hier nicht gezeigten Sonnenenergieanlage eingefangene Wärme in den Speicher transportiert (Ladevorgang). Der Weg des Transportfluids durch den Wärmespeicher wird dabei durch die mit "L" bezeichneten Pfeile angegeben. Umgekehrt kann das Wärmetransportfluid die gespeicherte Wärme bei Bedarf einer ebenfalls hier nicht gezeigten Verwendungsstelle, z. B. einem Dampferzeuger zuführen (Entladevorgang). Das Transportfluid nimmt dann den entgegengesetzten Weg durch den Wärmespeicher entsprechend den mit "E" bezeichneten Pfeilen. Das Gehäuse 1 enthält eine Schüttung aus Behältern 4, die gleicher Größe sein können und in mehrere Zonen (hier drei, mit A,B,C bezeichnet und zur Verdeutlichung getrennt dargestellt) unterteilt sind. Die zu einer bestimmten Zone gehörenden Behälter 4 sind mit je einem besonderen Wärmespeichermedium gefüllt, das beim Schmelzen bzw. Erstarren eine hohe Latentwärme aufnimmt bzw. abgibt. Die für die einzelnen Zonen A,B,C gewählten Speichermedien weisen unterschiedlich hohe Schmelzpunkte auf; dabei sind diejenigen Behälter 4,die die Füllung mit dem höchsten Schmelzpunkt aufweisen (hier in der Zone A) nahe dem beim Ladevorgang als Einlaß für das Wärmetransportfluid dienenden Anschluß 2 angeordnet. Die mit Speichermedien niedrigeren Schmelzpunktes gefüllten Behälter sind abgestuft nach ihren Schmelzpunkten in strömungsmäßig hinter (beim Ladevorgang) bzw. vor (beim Entladevorgang) angeordneten Zonen (hier B und C) angeordnet. Das Gehäuse . kann mit Einrichtungen 3 bekannter Bauart zur gleichmäßigen Verteilung des Wärmetransportfluids über den Behälterquerschnitt versehen sein.

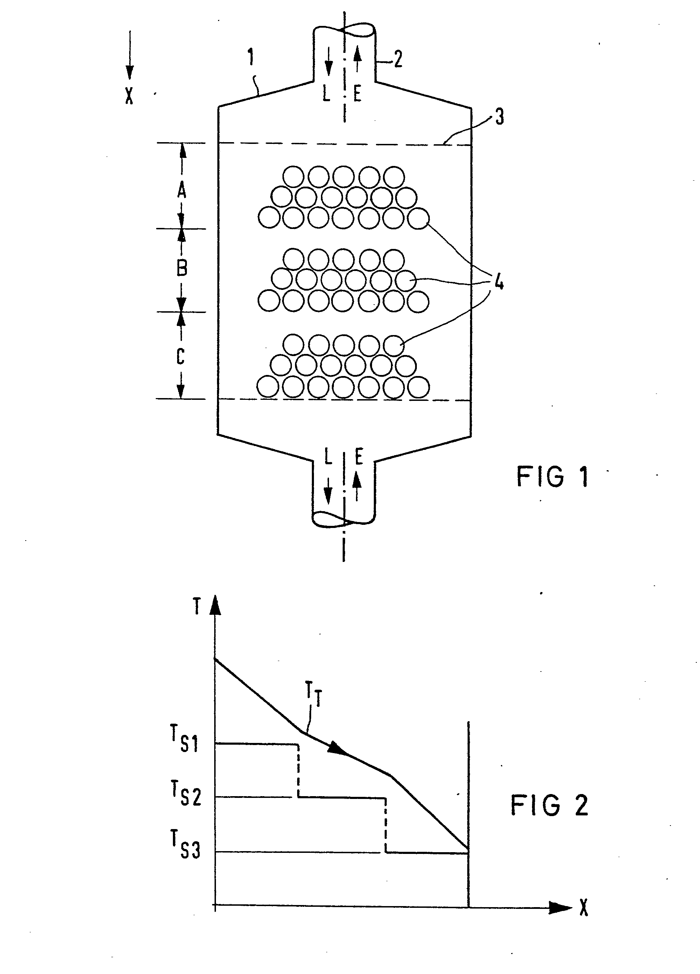

Das Temperatur-Weg-Diagramm der Figur 2 verdeutlicht den Temperaturverlauf $T_T$ im Wärmetransportfluid während des Durchströmens des Wärmespeichers entlang der Strecke X (hier von oben nach unten während des Ladevorgangs). Entlang der Temperaturskala T sind die Schmelzpunkte der verschiedenen, in den einzelnen Zonen A,B,C verwendeten Wärmespeichermedien mit $T_{s1}$, $T_{s2}$ bzw. $T_{s3}$ angegeben. Es ist daraus ersichtlich, daß im Verlauf des Ladevorgangs die parallel zur $T_T$-Kurve verlaufende, allmählich ansteigende Kurve der Temperaturen in den Speicherbehältern in allen drei Zonen den jeweiligen Schmelzpunkt etwa gleichzeitig erreicht.

Bei einer Verwendung des dargestellten Wärmespeichers in einer gasgekühlten Sonnenenergieanlage mit einer Einlaßtemperatur von 1200°C und einer Auslaßtemperatur von 750°C während des Ladevorganges können die Behälter in den einzelnen Zonen mit den folgenden Stoffen gefüllt werden:

|        | Schmelzstoff        | Schmelztemperatur | Schmelzwärme |
|--------|---------------------|-------------------|--------------|
| Zone A | NaF                 | 995°C             | 796 kJ/kg    |
| Zone B | 75% NaF/25% Mg $F_2$ | 830°C             | 649 kJ/kg    |
| Zone C | 67% LiF/33% Mg $F_2$ | 746°C             | 908 kJ/kg    |

Patentanspruch

Latentwärmespeicher mit Ein- und Auslässen für ein
Wärmetransportfluid, das den Speicher während des
Ladevorganges in der einen und während des Entladevorganges in der entgegengesetzten Richtung durchströmt, wobei das Speichermedium in mehreren voneinander getrennten, nacheinander vom Transportfluid
bestrichenen Behältern eingeschlossen ist mit folgenden
M e r k m a l e n :

　　a)　　Es sind mit Speichermedien unterschiedlich hohen
　　　　　Schmelzpunktes gefüllte Behählter (4) vorhanden.

　　b)　　Die Behälter (4) sind abgestuft nach dem Schmelzpunkt dieser Füllung entlang des Weges des
　　　　　Transportfluids angeordnet.

FIG 1

FIG 2

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>FR - A - 2 365 772</u> (LAING)<br>* Seite 6, Zeilen 9-28; Figur 5 *<br><br>-- | 1 | F 24 J 3/00 |
| X | <u>DE - A - 2 845 865</u> (SOLVAY)<br>* Seiten 14-19; Figuren 1,2 *<br><br>-- | 1 | |
| X | <u>FR - A - 2 400 162</u> (ANQUEZ)<br>* Seite 4, Zeilen 18-30; Figuren 9,10 *<br><br>-- | 1 | |
| X | <u>US - A - 4 127 161</u> (CLYNE)<br>* Spalten 4-6; Figur 4 *<br><br>-- | 1 | RECHERCHIERTE SACHGEBIETE (Int. Cl.³)<br><br>F 24 J |
| | <u>DE - A - 2 552 698</u> (ERNO)<br>* Seite 5, Absätze 3,4 *<br><br>-- | 1 | |
| | <u>FR - A - 1 050 933</u> (TELKES)<br>* Seite 2 *<br><br>-- | 1 | |
| XP | <u>DE - A - 2 916 839</u> (GEY)<br>* Ansprüche 1-3 *<br><br>---- | 1 | |

Der vorliegende Recherchenbericht wurde für alle Patentansprüche erstellt.

| Recherchenort | Abschlußdatum der Recherche | Prüfer |
|---|---|---|
| Den Haag | 26-10-1981 | SMETS |

EPA form 1503.1   06.78